# EUROPEAN PATENT SPECIFICATION

(11) **EP 2 878 206 B1**
(45) Date of publication and mention of the grant of the patent: **07.06.2017**
(21) Application number: 14003478.6
(22) Date of filing: 10.10.2014
(51) Int. Cl.: A23G 1/22, A23G 1/50, A23G 3/12, A23G 3/56, A23G 9/26, A23G 9/50, A23P 30/10, A47J 43/20, A23G 3/02

(54) **MOULD FOR FOOD PRODUCTS**
GIESSFORM FÜR LEBENSMITTELPRODUKTE
MOULE POUR ARTICLES ALIMENTAIRES

(30) Priority: 29.11.2013 IT MI20131994
(43) Date of publication of application: 03.06.2015
(73) Proprietor: Pavoni Italia S.p.a., 24040 Suisio (BG) (IT)
(72) Inventor: Raineri, Corinna, 24129 Bergamo (IT)
(74) Representative: Jaumann, Paolo

(56) References cited:
- EP-A1- 2 327 313
- US-A- 2 212 764
- US-A- 2 212 765
- US-A- 2 682 234
- US-A- 2 860 583
- US-A- 5 738 895
- US-A1- 2006 040 026

## Description

The present invention relates to a mould for food products provided with a support, in particular a stick (which may have different cross-sections and shapes) made of a suitable material, for example wood or plastic; the food products may be, for example, ice creams, ice lollies, sweet or savoury products suitable to be cooked and/or frozen.

According to one aspect of the invention, the products in question are prepared using a paste or a fluid which undergoes solidification or hardening - by either cooking or freezing - once placed in the mould.

Moulds of this type are commonly made of a flexible material, for example an clastomeric material, and very frequently silicone, which offers the advantage of being perfectly suitable for food use and able to maintain its strength and flexibility within a wide range of temperatures, ranging from freezing temperatures to those used in cooking.

In the case of food supported on a stick, such as those stated above, moulds made of the flexible material have advantageously replaced the rigid variety which posed problems when removing the product from the mould and, in general, needed to be positioned vertically, with the product upside down, as well as requiring external support structures until the product had hardened.

To allow the insertion of the support into the moulds made of silicone or suchlike, several solutions are adopted, such as that described in EP 2 327 313, whereas in those moulds, in general, the support is maintained in a horizontal position and the product is removed in a transverse direction to the support. For example, a mould has been made with a cavity to house the product which is sealed laterally by a membrane with a hole designed to house the stick. This solution renders product removal manoeuvres difficult, as the stick needs to be contextually slid out of the hole from the inside of the cavity, which usually means the product is handled not only by the stick, but also by the food part. This slows down operations and generates a risk of breakage or or damage to the product, as well as constituting a possible hygiene problem if the operation is not carried out with gloves on. Furthermore, the thin perforated membrane does not provide a proper seal around the stick, especially with very liquid products, or if one wishes to insert the support after the product has been placed in the cavity, such placement being generally easier without the stick present. This leads to the product leaking out considerably and possible consequent dirtying.

Other solutions envisage the use of removable parts to close the cavity and to provide, in cooperation with the rest of the mould, a seat that houses a part of the support outside the cavity of the mould. The positioning of these parts is not always quick and easy, given the flexibility of the mould, and inaccuracies are often possible, accompanied by leakage of the product if liquid and possible abnormalities in terms of shape of the finished product. To facilitate the positioning, one expedient to which recourse is often made is the production of the removable part using a more rigid material than that of the mould, thereby making it more expensive to manufacture and not obviating all the possible positioning errors. Furthermore, the removable part may also get lost.

The problems outlined above have now been solved using a mould for food products, according to claim 1.

According to a further preferred aspect, the channel formed - when the scaling appendage is in such a position as to seal the opening - connects the interior of the cavity with the exterior, said mould having a hole in correspondence with the edge where the sealing appendage is hinged and permitting the insertion of the stick in this position.

The contents of the claims appended hereto constitute a particular aspect of the invention.

The present invention will now be better illustrated in a more detailed fashion by means of the description of a preferred embodiment, provided in the form of a non-limiting example, with respect to the scope of protection offered by the claims, with the help of the accompanying drawings, in which:
Figure 1 shows, schematically, a plan view of the mould according to the present invention.
Figure 2 shows, schematically, a sectional view according to the plane II-II of Figure 1;
Figure 3 shows, schematically and from a perspective view, the mould in Figures 1 and 2.

With reference to the figures, the mould has a body 1, onto which a sealing appendage 2 is hinged.

The body features a cavity 3 designed to accommodate the product while still liquid and give form to the finished product. The number of the cavities can be variable depending on the requirements and the use for which the mould is intended. Each cavity has an opening 4 designed to allow a stick to protrude sufficiently inside the cavity. A support portion 5, is positioned adjacent to the openings 4 and is designed to support the sticks. According to a possible embodiment, the support portion may feature seats 6 for housing the sticks.

As said, the closing appendage 2 is hinged to the body 1. According to a preferred aspect, the appendage and the body form a single body made of a flexible material, such as silicone or elastomer, suitable for food use.

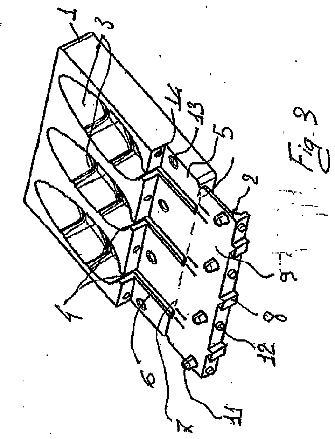

According to a further preferred aspect, they are joined by a membrane 7, which is clearly visible in Figure 3 in particular and which allows the appendage 2 to be bent over the body 1 in the direction shown by arrow A. In this way, the sealing appendage, appropriately shaped, can seal the openings 4. According to a preferred aspect, it is shaped in an appropriate manner, in correspondence of the sections 8, which are located in correspondence with the openings 4, so as to seal them and cooperate with the surface of the body in shaping the internal surface of the cavity, in a manner corresponding to the shape of the desired product.

In the closed position, the appendage 2 cooperates with the support portion 5, so as to create said channels designed to house and hold the sticks in position. In the case exemplified, the surface 9 of the sealing appendage marks out said channel with the seats 6. Other solutions are possible, such as providing the seats on the sealing appendage, instead of the support, or on both, or making parts in relief on one or both of the opposing surfaces. The solution exemplified offers the advantage of allowing, if so desired, the stick to be positioned even when the appendage is not in the sealed position.

Preferably, it is possible for the stick to be inserted when the appendage is in the sealed position. In the event that the appendage is hinged in a position opposite to the openings with respect to the support portion, it is possible for the channels to be open in correspondence with said hinging. For example, the membrane that acts as a hinge, can be cut away in correspondence with such channels, creating the holes 10. Obviously, with the appendage in the sealed position, these holes will constitute the openings through which the sticks can be inserted.

Locking means are preferably envisaged in order to keep the appendage in the sealed position.

Interlocking systems may be envisaged for example, such as the first pairs of protuberances 11 and second pairs 12, which are designed to interlock, respectively, inside the holes 13 and the recesses 14, the positioning and the interlocking being possible thanks to the elasticity of the material of which the mould is made. According to another preferred aspect, the first protuberances only may be present, having the respective holes (which may also be simply recesses), which give sufficient stability to the seal, together with greater simplicity of use.

Other interlocking arrangements may also be adopted, for example by exchanging the holes and protuberances with holes and cavities or other devices, or by providing different types of means based on the knowledge of those skilled in the art.

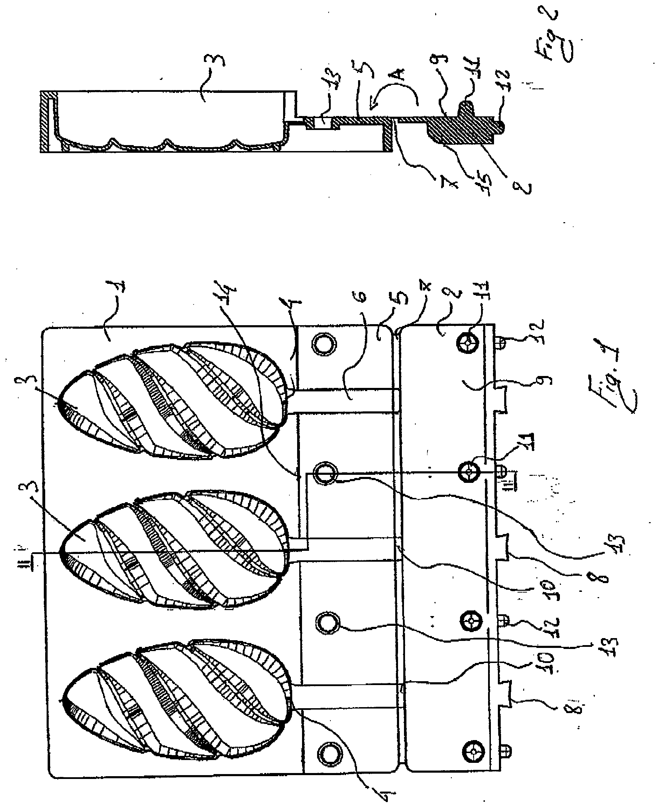

In the case exemplified, the ribs 15 shown in Figure 2 have been made to confer to the appendage stability and rigidity. They could also constitute a valid holding point for opening and closing operations.

Other ribs or devices to confer stability may also be envisaged according to requirements.

The position of the hinging - in particular if such hinging essentially concerns all or a large part of the mutual rotation axis of the appendage and the body - confers precision to the closing operation and prevents a different folding of the two parts leading to an imperfect seal due to the elasticity of the materials, and the accompanying material leakage and deformity of the product obtained, even during quick operation.

The opening of the appendage completely releases the openings 4 and allows easy removal of the finished products without excessive deformation of the mould or manoeuvres that could damage the products just made. In particular, the product can be extracted by holding it just by the stick, and with minimal deformation of said mould, solely to detach said product from surfaces of the cavity, unlike that which occurs with the existing solutions discussed above.

The stick may be made of any appropriate material, such as those already mentioned above. Likewise, the shape of the stick may be of any known type, for example cylindrical.

When designing the mould, one will need to take into account the type or types of stick with which the mould is intended to work.

According to a preferred aspect of the invention, as occurs in the mould exemplified, the mould allows the insertion of the stick when the appendage is in the sealed position; the insertion depth can be decided by the user according as desired and specifically required for the product, by sliding the stick into the channel formed as described above.

## Claims

1. A mould, made of a flexible material, in particular an elastomeric or silicone material, having a body (1) comprising one or more aligned cavities (3) designed to house a food product, said cavities each featuring a lateral opening (4) connected with a portion (5) for supporting a stick, said mould featuring a sealing appendage (2), hinged with said body, being designed, when in a closed position, to seal the opening of said cavity, thus forming a channel designed to house and hold the stick in position, wherein in the closed position, the appendage (2) cooperates with the support portion (5), so as to create said channel designed to house and hold the stick in position and wherein said scaling appendage is hinged to an edge (7) of said body and said cavities are in an opposing position to said edge with respect to said supporting portion..

2. A mould according to claim 1, wherein said channel formed, when the sealing appendage is in the closed position, connects the interior of the cavity with the exterior, said mould having a hole (10) in correspondence with the edge (7) where the sealing appendage is hinged and permitting the insertion of the stick in this position.

3. A mould according to claim 2, wherein the appendage and the body are made as a single piece and arc joined by a membrane (7) which acts as a hinge.

4. A mould according to claim 3 wherein said membrane is interrupted creating holes (10) in correspondence with said channels.

5. A mould according to any previous claim, wherein there are looking means envisaged for retaining the appendage in the closed position.

6. A mould according to claim 5, wherein said means are protuberances (11,12) and holes (13) or recesses (14) designed for mutual interlocking.

## Patentansprüche

1. Eine Form, bestehend aus elastischem Material, insbesondere einem Material mit Elastomer oder einem silicon, das einen Korpus (1) hat, der eine oder mehrere ausgerichtete Hohlräume (3) enthält, die dazu bestimmt sind, ein Nahrungsmittelprodukt aufzunehmen, wobei die einzelnen genannten Hohlräume eine seitliche Öffnung (4) besitzen, die mit einem Teil (5) zum Halten eines Stabs verbunden sind, die so entworfen wurden, wobei die genannte Form einen Verschlussansatz (2) aufweist, der am genannten Korpus angelenkt ist und so gestaltet wurde, dass er in einer geschlossenen Position die öffnung des genannten Hohlraums verschließt, wodurch ein Kanal zur Aufnahme und zum Halten des Stabs in seiner Position gebildet wird, wobei der Ansatz (2) in der geschlossenen Position mit dem Halteteil (5) zusammenwirkt, um den genannten Kanal zur Ausnahme und zum Halten des Stabs in seiner Position zu bilden, und der genannte Verschlussansatz an einer Kante (7) des genannten Korpus angelenkt ist und sich die genannten Hohlräume in einer zu der genannten Kante in Bezug auf den genannten Halteteil in einer gegenüberliegenden Position befinden.

2. Eine Form gemäß Patentanspruch 1, wobei der genannte Kanal, der gebildet wird, wenn die der Verschlussansatz in der geschlossenen Position befindet, das Innere des Hohlraums mit dem Äußeren verbindet, und die genannte Form eine Öffnung (10) an der Kante (7) hat, wo der Verschlussansatz angelenkt ist und das Einführen des Stabs in dieser Position ermöglicht.

3. Eine Form gemäß Patentanspruch 2, wobei der Ansatz und der Korpus aus einem einzigen Stück bestehen und von einer Membran (7) verbunden werden, die als Gelenk wirkt.

4. Eine Form gemäß Patentanspruch 3, wobei die genannte Membran Unterbrechungen aufweist, die an den genannten Kanälen Löcher (10) bilden.

5. Eine Form gemäß allen vorausgehenden Patentansprüchen, wobei Befestigungsmittel vorhanden sind, die dazu bestimmt sind, den Ansatz in der geschlossenen Position zu halten.

6. Eine Form gemäß Patentanspruch 5, wobei die genannten Befestigungsmittel Vorsprünge (11, 12) und Löcher (13) oder Aussparungen (14) sind, die ineinander greifen sollen.

## Revendications

1. Moule, réalisé dans un matériau flexible, en particulier un matériau élastomère ou à base de en silicone, ayant un corps (1) comprenant une ou plusieurs cavités alignées (3) conçues pour contenir un produit alimentaire, lesdites cavités présentant une ouverture latérale (4) reliée à une portion (5) pour soutenir un bâtonnet, ledit moule présentant un appendice de scellage (2), fixé par une charnière au dit corps, étant conçu, lorsqu'il est en position fermée, pour boucher l'ouverture de ladite cavité, formant ainsi un canal conçu pour contenir et maintenir le bâtonnet en position, dans lequel en position fermée, l'appendice (2) coopère avec la portion de support (S), de manière à créer ledit canal conçu pour contenir et maintenir le bâtonnet en position et dans lequel ledit appendice de scellage est fixé par des charnières à un bord (7) dudit corps et lesdites cavités sont dans une position opposée au dit bord par rapport à ladite portion de support.

2. Moule selon la revendication 1, dans lequel ledit canal formé, lorsque l'appendice de scellage est en position fermée, relie l'intérieur de la cavité et l'extérieur, ledit moule ayant un trou (10) au niveau du bord (7), lorsque l'appendice de scellage est fixé par des charnières et permettant l'insertion du bâtonnet dans cette position.

3. Moule selon la revendication 2, dans lequel l'appendice et le corps sont réalisés en une seule pièce et sont unis par une membrane (7) qui exerce la fonction de charnière.

4. Moule selon la revendication 3, dans lequel ladite membrane est interrompue en créant des trous (10) aux niveaux desdits canaux.

5. Moule selon l'une quelconque des revendications précédentes, dans lequel il y a des moyens de verrouillage prévus pour retenir l'appendice en position fermée.

6. Moule selon la revendication 5, dans lequel lesdits moyens sont des protubérances (11, 12) et des trous (13) ou des renfoncements (14) conçus pour le verrouillage mutuel.
